# FASCICULE DE BREVET EUROPEEN

(11) **EP 1 246 718 B1**
(45) Date de publication et mention de la délivrance du brevet: **04.06.2003**
(21) Numéro de dépôt: 00958751.0
(22) Date de dépôt: 28.08.2000
(51) Int. Cl.: B29C 49/12

(54) **MACHINE ROTATIVE D'ETIRAGE-SOUFFLAGE COMPORTANT UNE COMMANDE MAGNETIQUE DE LA TIGE D'ETIRAGE**
ROTATIONSSTRECKBLASMASCHINE MIT EINEM MAGNETISCH ANGETRIEBENEN STRECKHELFER
ROTARY STRETCH BLOW MOULDING MACHINE COMPRISING A MAGNETICALLY CONTROLLED STRETCH ROD

(30) Priorité: 03.09.1999 FR 9911150
(43) Date de publication de la demande: 09.10.2002
(73) Titulaire: SIDEL, 76053 Le Havre Cedex (FR)
(72) Inventeur: EVRARD, Alain, F-76053 Le Havre Cedex (FR)
(74) Mandataire: Siloret, Patrick
(86) Numéro de dépôt international: FR0002387
(87) Numéro de publication internationale: WO01017752

(56) Documents cités:
- FR-A- 2 413 196
- FR-A- 2 662 631
- US-A- 4 141 680

## Description

L'invention se rapporte au domaine des machines de fabrication de récipients en matière thermoplastique par étirage et soufflage d'une préforme qui est précédemment réalisée par moulage par injection.

De telles machines sont notamment utilisées pour fabriquer des récipients, par exemple des bouteilles en polyéthylène téréphtalate (PET).

Dans une telle machine, on utilise des préformes sensiblement tubulaires qui sont fermées à une de leurs extrémités axiales et dont l'autre extrémité axiale est ouverte et présente déjà la forme définitive du col du récipient final.

Chaque préforme est chauffée dans un four de conditionnement thermique de manière à amener le corps de la préforme à une température supérieure à la température de transition vitreuse du matériau thermoplastique. La préforme ainsi conditionnée est transférée vers un moule de soufflage dans lequel est délimitée une cavité à la forme du récipient à obtenir. La préforme est disposée dans le moule de telle sorte que son extrémité ouverte dépasse à l'extérieur du moule. Ainsi, un dispositif de soufflage peut être amené au niveau du col de la préforme pour injecter de l'air sous pression dans la préforme. Simultanément, une tige d'étirage est introduite axialement à l'intérieur de la préforme pour venir en appui contre l'extrémité fermée du fond de la préforme. La tige d'étirage permet ainsi de commander au mieux la déformation axiale de la préforme au cours du soufflage du récipient.

Un des paramètres important pour le bon fonctionnement d'un tel procédé de soufflage réside dans une bonne maîtrise de la vitesse du mouvement de la tige d'étirage et dans une parfaite synchronisation de ce mouvement avec le déclenchement du soufflage.

L'invention est plus particulièrement destinée à être mise en oeuvre dans une machine d'étirage-soufflage de type rotatif dans lequel la machine comporte plusieurs postes de soufflage montés à la périphérie d'un carrousel qui est entraîné de manière continue en rotation autour de son axe. Chaque poste de soufflage comporte notamment un moule de soufflage, un dispositif de soufflage et un dispositif d'étirage.

Selon une conception connue, le mouvement de la tige d'étirage est commandé par un vérin pneumatique qui fournit l'énergie nécessaire au déplacement de la tige mais la vitesse d'étirage est régulée grâce à un dispositif à galet et à came qui permet de parfaitement synchroniser la position axiale de la tige d'étirage en fonction de la position angulaire du poste de soufflage considéré autour de l'axe de rotation du carrousel.

Ces systèmes donnent entière satisfaction en termes de fonctionnement du procédé de soufflage. Toutefois, il est apparu le besoin de diminuer de manière importante la consommation de fluide sous pression de ces machines de soufflage. Or, une des sources de consommation des machines précédemment connues est constituée par les vérins de commande de la tige d'étirage de chaque poste de soufflage.

L'invention a donc pour but de proposer une solution particulièrement simple et efficace pour commander les déplacements de la tige d'étirage sans faire appel à un fluide sous pression, et sans non plus sacrifier la maîtrise du point de déclenchement et de la vitesse du mouvement de la tige.

Dans ce but, l'invention propose une machine de fabrication de récipients en matière thermoplastique par étirage et soufflage d'une préforme qui est précédemment réalisée par injection, du type comportant plusieurs poste de moulage qui sont montés sur un carrousel entraîné en rotation de manière continue autour de son axe par rapport à un bâti de la machine, et du type dans lequel chaque poste est muni d'au moins une tige d'étirage qui est commandée en coulissement selon son axe pour assurer l'étirage de la préforme au cours de l'opération de soufflage, caractérisée en ce que la tige d'étirage est commandée par un dispositif magnétique comprenant un guide magnétique fixe agencé autour de l'axe de rotation du carrousel et un coulisseau qui est solidaire de la tige d'étirage et qui porte un patin magnétique, et en ce que le patin et le guide coopèrent par couplage magnétique pour que, en fonction de la position angulaire du carrousel, le guide impose au coulisseau un déplacement axial déterminé.

Selon d'autres caractéristiques de l'invention :
- le couplage magnétique est effectué sans contact ;
- le patin et le guide coopèrent l'un en regard de l'autre selon une direction perpendiculaire à la direction axiale de déplacement du coulisseau ;
- le guide est séparé en plusieurs tronçons ;
- la machine comporte deux guides jumelés qui sont disposés côte à côte, le coulisseau circulant entre les deux guides jumelés ;
- l'un au moins des patins magnétiques est réalisé sous la forme d'un aimant permanent ;
- le coulisseau comporte au moins un premier aimant permanent (32) qui coopère avec un guide pour commander le coulisseau selon un premier sens de déplacement axial, et au moins un second aimant permanent pour commander le coulisseau selon le sens contraire ; et
- le coulisseau est maintenu dans une position axiale extrême par un moyen magnétique solidaire du carrousel.

D'autres caractéristiques et avantages de l'invention apparaîtront à la lecture de la description détaillée qui suit, ainsi que dans les dessins annexés dans lesquels :

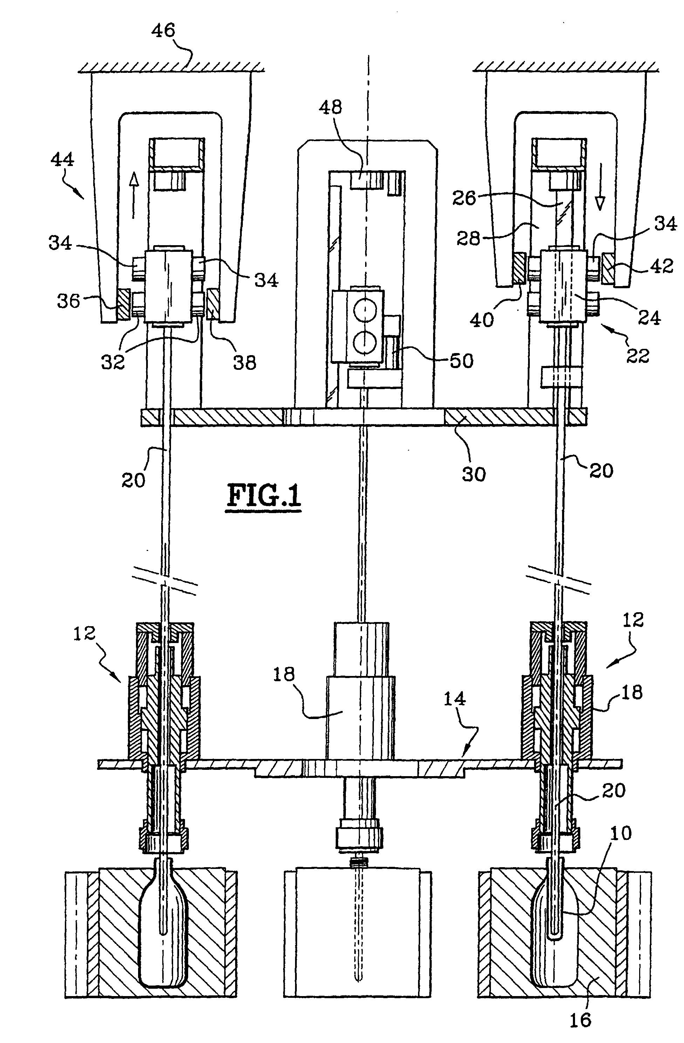

- la figure 1 est une vue schématique coupe axiale d'une partie d'une machine rotative selon l'invention ;

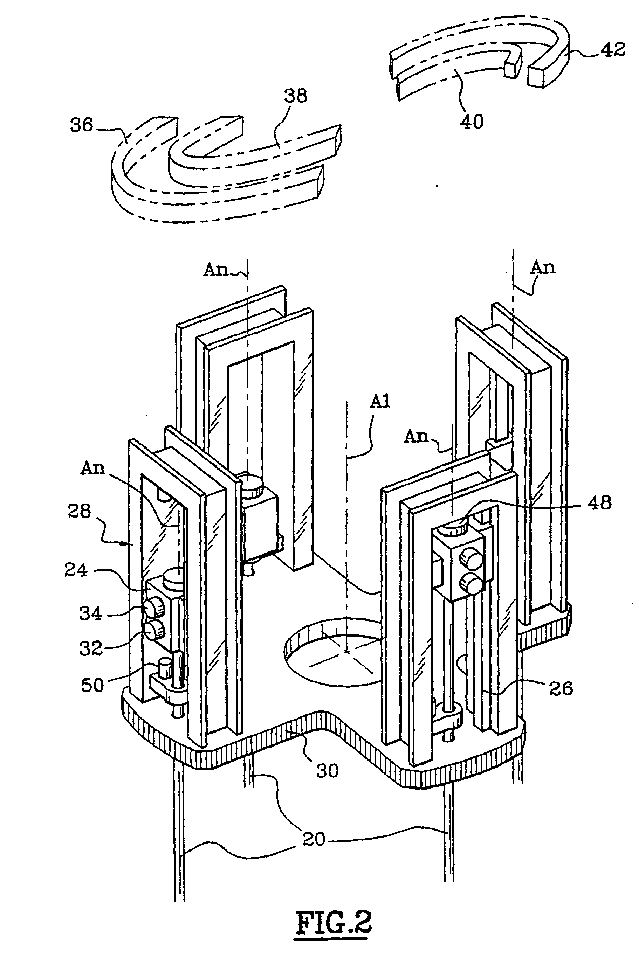

- la figure 2 est une vue schématique en perspective éclatée de la partie supérieure de la machine de la figure 1 ;

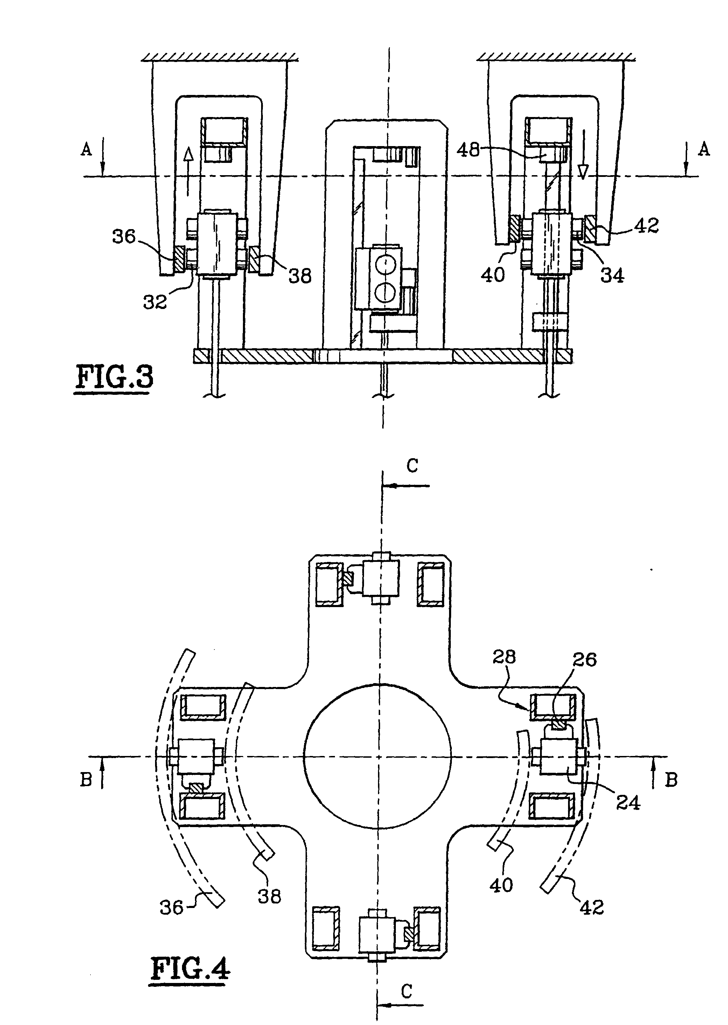

- la figure 3 est une vue partielle en coupe axiale selon la ligne B-B de la figure 4 illustrant plus particulièrement les moyens de commande des déplacements des tiges d'étirage ;
- la figure 4 est une vue en coupe selon la ligne A-A de la figure 3 ;
- la figure 5 est une vue en coupe selon la ligne C-C de la figure 4.

On a représenté sur les figures, de manière schématique et partielle, une machine de fabrication de récipients en matériau thermoplastique par étirage et soufflage d'une préforme 10 préalablement réalisée par moulage par injection.

Plus particulièrement, cette machine est du type rotatif, c'est-à-dire qu'elle comporte plusieurs postes 12 d'étirage-soufflage montés sur un carrousel 14. Le carrousel 14 est entraîné en rotation de manière continue autour de son axe A1.

Chaque poste d'étirage soufflage 12 comporte pour l'essentiel un moule de soufflage 16, une tuyère de soufflage 18, une tige d'étirage 20 et des moyens de commande 22 des déplacements de la tige d'étirage 20.

Dans l'exemple illustré, l'axe A1 de rotation du carrousel 14 est un axe vertical et chaque poste d'étirage 12 est agencé selon un axe An vertical, les axes An étant disposés à 90 degrés l'un de l'autre sur un cercle autour de l'axe A1. Les préformes 10 sont soufflées avec leur extrémité ouverte tournée vers le haut de sorte que la tuyère de soufflage 18 et la tige d'étirage 20 sont agencées au-dessus du moule 16. De cette disposition découle le choix des notions de haut et de bas qui seront utilisées dans la suite du texte mais qui ne doivent pas êtres interprétées comme des limitations à la portée de l'invention.

Du fait de cette disposition, la tige d'étirage 20 de chaque poste 12 est donc amenée à être déplacée verticalement selon l'axe An correspondant entre une position haute et une position basse. Plus précisément, puisque chaque poste de soufflage procède au soufflage d'un récipient à chaque tour du carrousel 14, les tiges 20 effectuent un aller-retour entre leur positions haute et basse à chaque tour du carrousel 14.

De manière connue, les tiges 20 sont fixées à leur extrémité supérieure sur un coulisseau 24 qui peut coulisser verticalement sur un rail 26 monté sur un portique 28 solidaire du carrousel 14. Le portique 28 présente la forme d'un U renversé composé de deux montants verticaux réunis à leur sommet par une traverse. Le portique 28 s'étend dans un plan perpendiculaire à un rayon du carrousel et le rail 26 de guidage du coulisseau est fixé sur l'un des montants du portique de telle sorte que le coulisseau est reçu entre les deux montants.

La tige 20 s'étend vers le bas au travers d'un orifice percé dans une plaque supérieure 30 du carrousel sur laquelle sont fixés les portiques 28 correspondant aux différentes unités de soufflage. Par ailleurs, de façon connue, chaque tige 20 s'étend axialement au travers de la tuyère de soufflage 18 correspondante de telle sorte que son extrémité inférieure puisse s'engager axialement dans une préforme emprisonnée dans une cavité du moule 16.

Conformément aux enseignements de l'invention, les moyens de commande 22 qui provoquent le déplacement des tiges d'étirage 20 au cours de la rotation du carrousel 14 comportent des moyens magnétiques.

Ainsi, chaque coulisseau porte au moins un aimant qui est destiné à coopérer à distance avec des guides en matériau magnétique qui sont disposés à la périphérie du carrousel et qui sont solidaires d'un chassis fixe de la machine. Les guides s'étendent ainsi selon des arcs de spirale d'axe A1.

Dans l'exemple illustré, chaque coulisseau 24 comporte deux paires 32, 34 d'aimants.

Une première paire d'aimants 32 est prévue pour assurer la remontée de la tige 20 vers sa position haute. Un premier des ces aimants de remontée 32 est agencé sur une face du coulisseau 24 qui est tournée radialement vers l'extérieur. II est prévu pour coopérer avec un guide externe 36 qui est agencé à l'extérieur de la trajectoire des portiques 28. Le second des aimants de remontée 32 est tourné radialement vers l'intérieur et coopère avec un guide interne 38 agencé à l'intérieur de la trajectoire des portiques. Les deux guides interne et externe qui assurent la remontée du coulisseau sont bien entendu agencé parallèlement en regard l'un de l'autre et ils sont écartés entre eux d'un espace permettant le passage des portiques 28 et des coulisseaux 24.

De la même manière, chaque coulisseau 24 comporte deux aimants 34 de descente interne et externe qui sont prévus pour coopérer avec des guides de descente interne 40 et externe 42 parallèles.

Dans l'exemple illustré, les aimants de remontée 32 sont agencés sur le coulisseau 24 au-dessous des aimants de descente 34.

Les guides 36, 38, 40, 42 sont par exemple portés par des fourches 44 en U renversé qui sont accrochées par leur partie supérieure en dessous d'un plateau supérieur 46 du châssis de la machine. Bien entendu, l'écartement des deux branches de chaque fourche 44 est prévu pour permettre le passage des portiques 28.

Les moyens de commande 22 comportent par ailleurs des butées haute et basse qui peuvent maintenir chaque coulisseau 24, et donc les tiges 20, en position haute et basse. Dans l'exemple proposé, chaque portique 28 comporte ainsi un butée magnétique haute 48 et une butée magnétique basse 50 sur lesquelles le coulisseau peut venir se plaquer respectivement en position haute et en position basse.

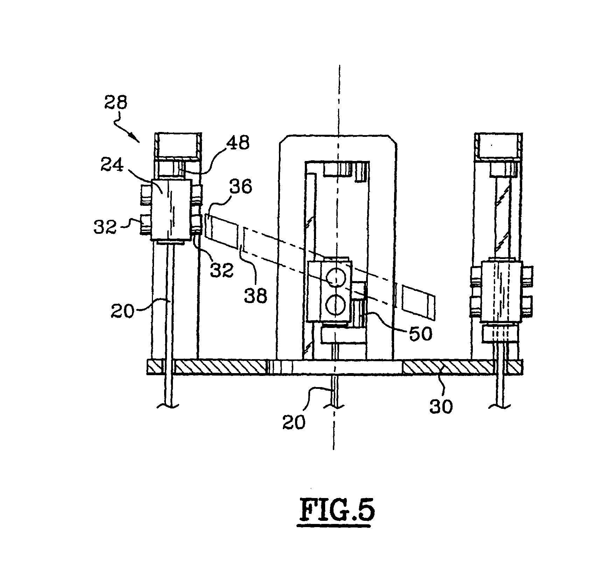

Les guides de montée 36, 38 sont ainsi agencés sur le chassis de la machine de telle sorte que leur extrémité amont, par rapport au sens de rotation du carrousel 14, est située verticalement à la hauteur des aimants de remontée 32 des coulisseaux 24 lorsque les coulisseaux sont en position basse. Leur extrémité aval est située à la hauteur des aimants de remontée 32 lorsque les coulisseaux sont en position haute. Entre les deux, les guides peuvent suivre une dénivelée régulière, comme cela est illustré à la figure 5, ou au contraire suivre une pente variable pour obtenir une variation de vitesse particulière des tiges d'étirage.

En sens contraire, les deux guides de descente 40, 42 suivent une pente entre les position haute et basse des aimants de descente 34.

Ainsi, au cours de la rotation du carrousel 14, lorsqu'un des aimants d'un coulisseau 24 arrive en regard de l'extrémité amont du guide correspondant, le flux magnétique de cet aimant se reboucle sur le guide de sorte qu'il s'exerce entre le guide et l'aimant une force d'attraction importante. Aussi, à partir de ce moment "d'accrochage", la variation de hauteur du guide se traduit par un effort exercé par l'aimant sur le coulisseau dans un sens tel que le coulisseau suit la trajectoire du guide. Le coulisseau est en effet décroché de sa position de butée initiale et il est amené au cours de la rotation du carrousel jusqu'à son autre position de butée. En choisissant des aimants suffisamment puissants, et en respectant une bonne géométrie des pièces, on obtient une très bonne précision de guidage vertical du coulisseau le long de sa trajectoire. En effet, l'effort d'attraction entre l'aimant et le guide correspondant est tel que, pour une position angulaire donnée du carrousel, il ne permet presque aucun décalage entre la position verticale du coulisseau 24 et celle du guide.

Grâce à l'invention, on obtient ainsi une commande particulièrement simple et fiable des déplacements des tiges d'étirages. Ces moyens magnétiques sont avantageux car, par rapport aux vérins pneumatiques, ils permettent d'éviter toute consommation d'air sous pression. Du fait qu'ils fonctionnent sans contact, ils ne sont pas sujets à l'usure et, de plus, ils sont particulièrement simples à régler. Pour adapter la machine à un nouveau format de récipient, il suffira par exemple de modifier les positions de butée haute et basse du coulisseau 24. En variante, on pourrait aussi prévoir des jeux de guides adaptés à la course d'étirage des tiges 20.

Dans l'exemple illustré, on a choisi de disposer, pour chaque poste de soufflage, deux aimants de montée et deux aimants de descente, ce qui a pour conséquence de nécessiter deux guides jumelés de montée et deux guides jumelés de descente. Toutefois, dans certaines applications, on pourra se contenter d'un seul aimant de montée et d'un seul aimant de descente, ce qui permettra de réduire aussi le nombre de guides. De même, alors qu'il a été choisi dans l'exemple illustré de distinguer les aimants de descente des aimants de montée, on pourrait aussi prévoir qu'un même aimant puisse assurer les deux fonctions.

Bien entendu, d'autres variantes de l'invention sont encore possibles. On peut ainsi envisager de remplacer les aimants de montée et de descente, qui sont ici réalisés sous la forme d'aimants permanents, par des électro-aimants. Il en va de même pour les butées magnétiques haute et basse.

Par ailleurs, l'invention peut aussi être mise en oeuvre dans le cas des machines où les moules de soufflage comportent plusieurs cavités pour permettre le soufflage de plusieurs récipients simultanément. Dans ce cas, le coulisseau de chaque poste d'étirage-soufflage portera plusieurs tige d'étirage,

## Revendications

1. Machine de fabrication de récipients en matière thermoplastique par étirage et soufflage d'une préforme (10), du type comportant plusieurs postes de moulage (12) qui sont montés sur un carrousel (14) entraîné en rotation de manière continue autour de son axe (A1) par rapport à un bâti (46) de la machine, et du type dans lequel chaque poste (12) est muni d'au moins une tige d'étirage (20) qui est commandée en coulissement selon son axe (An) pour assurer l'étirage de la préforme (10) au cours de l'opération de soufflage.
**caractérisée en ce que** la tige d'étirage (20) est commandée par un dispositif magnétique comprenant au moins un guide magnétique fixe (36, 38, 40, 42) agencé autour de l'axe de rotation (A1) du carrousel (14) et un coulisseau (24) qui est solidaire de la tige d'étirage (20) et qui porte au moins un patin magnétique (32, 34), et **en ce que** le patin et le guide coopèrent par couplage magnétique pour que, en fonction de la position angulaire du carrousel (14), le guide impose au coulisseau (24) un déplacement axial déterminé.

2. Machine selon la revendication 1, **caractérisée en ce que** le couplage magnétique est effectué sans contact.

3. Machine selon la revendication 2, **caractérisée en ce que** le patin (32, 34) et le guide (36, 38, 40, 42) coopèrent l'un en regard de l'autre selon une direction perpendiculaire à la direction axiale (An) de déplacement du coulisseau (24).

4. Machine selon l'une quelconque des revendications précédentes, **caractérisée en ce que** le guide est séparé en plusieurs tronçons.

5. Machine selon l'une quelconque des revendications précédentes, **caractérisée en ce que** la machine comporte deux guides jumelés (36, 38), (40, 42) qui sont disposés côte à côte, le coulisseau (24) circulant entre les deux guides jumelés.

6. Machine selon l'une quelconque des revendications précédentes, **caractérisée en ce que** l'un au moins des patins magnétiques est réalisé sous la forme d'un aimant permanent.

7. Machine selon la revendication 6, **caractérisée en ce que** le coulisseau (24) comporte au moins un premier aimant permanent (32) qui coopère avec un guide (36, 38) pour commander le coulisseau (24) selon un premier sens de déplacement axial, et au moins un second aimant permanent (34) pour commander le coulisseau selon le sens contraire.

8. Machine selon l'une quelconque des revendications précédentes, **caractérisée en ce que** le coulisseau (24) est maintenu dans une position axiale extrême par un moyen magnétique (48, 50) solidaire du carrousel (28, 14).

## Claims

1. Machine for manufacturing containers made of thermoplastic material by stretch blow moulding of a preform (10), of the type comprising several moulding stations (12) mounted on a carrousel (14) driven in rotation continuously about its axis (A1) with respect to a frame (46) of the machine, and of the type in which each station (12) is equipped with at least one stretch rod (20) which is made to slide along its axis (An) so as to stretch the preform (10) during the blowing operation,
**characterized in that** the stretch rod (20) is controlled by a magnetic device comprising at least one fixed magnetic guide (36, 38, 40, 42) arranged around the axis of rotation (A1) of the carrousel (14) and a slider (24) which is secured to the stretch rod (20) and which bears at least one magnetic shoe (32, 34), and **in that** the shoe and the guide collaborate through magnetic coupling so that the guide imposes a determined axial movement on the slider (24) according to the angular position of the carrousel (14).

2. Machine according to Claim 1, **characterized in that** the magnetic coupling is contactless.

3. Machine according to Claim 2, **characterized in that** the shoe (32, 34) and the guide (36, 38, 40, 42) collaborate one facing the other in a direction perpendicular to the axial direction (An) of travel of the slider (24).

4. Machine according to any one of the preceding claims, **characterized in that** the guide is divided into several sections.

5. Machine according to any one of the preceding claims, **characterized in that** the machine has two twin guides (36, 38), (40, 42) arranged side by side, the slider (24) running between the two twin guides.

6. Machine according to any one of the preceding claims, **characterized in that** at least one of the magnetic shoes is produced in the form of a permanent magnet.

7. Machine according to Claim 6, **characterized in that** the slider (24) comprises at least one first permanent magnet (32) which collaborates with a guide (36, 38) to operate the slider (24) in a first axial direction of travel, and at least one second permanent magnet (34) to make the slider move in the opposite direction.

8. Machine according to any one of the preceding claims, **characterized in that** the slider (24) is held in an extreme axial position by a magnetic means (48, 50) secured to the carrousel (28, 14).

## Patentansprüche

1. Maschine zur Herstellung von Behältern aus Thermoplast durch Ziehen und Blasen einer Vorform (10), die mehrere Formstationen (12) umfasst, die auf einem Karussell (14) befestigt sind, das kontinuierlich um seine Achse (A1) in Bezug auf ein Gehäuse (46) der Maschine drehangetrieben wird, und bei der jede Station (12) mit mindestens einer Ziehstange (20) versehen ist, die entlang ihrer Achse (An) gleitend gesteuert wird, um das Ziehen der Vorform (10) während des Blasvorgangs sicher zu stellen,
**dadurch gekennzeichnet, dass** die Ziehstange (20) durch eine Magneteinrichtung gesteuert wird, die mindestens eine feststehende Magnetführung (36, 38, 40, 42), die um die Drehachse (A1) des Karussells (14) angeordnet ist, und einen Führungsschlitten (24) umfasst, der fest mit der Ziehstange (20) verbunden ist und mindestens eine Magnetkufe (32, 34) trägt, und dass die Kufe und die Führung durch Magnetkopplung zusammenwirken, damit die Führung dem Führungsschlitten (24) in Abhängigkeit von der Winkelposition des Karussells (14) eine bestimmte Axialverschiebung vorgibt.

2. Maschine nach Anspruch 1, **dadurch gekennzeichnet, dass** die Magnetkopplung kontaktlos erfolgt.

3. Maschine nach Anspruch 2, **dadurch gekennzeichnet, dass** die Kufe (32, 34) und die Führung (36, 38, 40, 42) einander gegenüber liegend entlang einer Richtung senkrecht zur Axialrichtung (An) der Verschiebung des Führungsschlittens (24) zusammenwirken.

4. Maschine nach einem der vorhergehenden Ansprüche, **dadurch gekennzeichnet, dass** die Führung in mehrere Abschnitte geteilt ist.

5. Maschine nach einem der vorhergehenden Ansprüche, **dadurch gekennzeichnet, dass** die Maschine zwei paarweise angeordnete Führungen (36, 38), (40, 42) umfasst, die Seite an Seite angeordnet sind, wobei der Führungsschlitten (24) zwischen den beiden paarweise angeordneten Führungen umläuft.

6. Maschine nach einem der vorhergehenden Ansprüche, **dadurch gekennzeichnet, dass** mindestens eine der Magnetkufen in Form eines Dauermagneten ausgeführt ist.

7. Maschine nach Anspruch 6, **dadurch gekennzeichnet, dass** der Führungsschlitten (24) mindestens einen ersten Dauermagneten (32), der mit einer Führung (36, 38) zusammenwirkt, um den Führungsschlitten (24) entlang einer ersten Axialverschieberichtung zu steuern, und mindestens einen zweiten Dauermagneten (34) umfasst, um den Führungsschlitten entlang der entgegengesetzten Richtung zu steuern.

8. Maschine nach einem der vorhergehenden Ansprüche, **dadurch gekennzeichnet, dass** der Führungsschlitten (24) durch ein fest mit dem Karussell (28, 14) verbundenes Magnetmittel (48, 50) in einer äußersten Axialposition gehalten wird.
